# EUROPEAN PATENT SPECIFICATION

(11) **EP 3 200 658 B1**
(45) Date of publication and mention of the grant of the patent: **27.05.2020**
(21) Application number: 15845886.9
(22) Date of filing: 29.09.2015
(51) Int. Cl.: A47G 9/10, B29C 44/04, B29C 44/12

(54) **DUAL DENSITY MOLDED FOAM PILLOW**
FORMSCHAUMSTOFFKISSEN MIT ZWEI DICHTEN
OREILLER EN MOUSSE MOULÉE À DEUX DENSITÉS

(30) Priority: 30.09.2014 US 201462057646 P
(43) Date of publication of application: 09.08.2017
(73) Proprietor: Tempur World, LLC, Lexington, KY 40511 (US)
(72) Inventor: IVES, James T., Church Hill, TN 37642 (US)
(74) Representative: Hoefer & Partner Patentanwälte mbB
(86) International application number: PCT/US2015/052839
(87) International publication number: WO 2016/053974

(56) References cited:
- EP-A1- 0 316 573
- WO-A1-2010/075296
- WO-A1-2013/152404
- CN-B- 101 851 880
- CN-U- 202 723 334
- CN-U- 203 137 802
- DE-A1- 3 627 286
- DE-A1- 10 005 919
- JP-A- 2005 110 702
- US-A1- 2001 018 777
- US-A1- 2005 278 852

## Description

### TECHNICAL FIELD

The present invention relates to a dual density molded foam pillow and method of producing the same. In particular, the present invention relates to a molded foam pillow including an interior portion with a density different than that of an outer portion of the pillow, according to the preamble part of claim 1. Such a pillow is known from US 2005/278852 A1.

### BACKGROUND

As is generally the case with support cushions, the effectiveness and desirability of the support cushion is partly a function of how well the support cushion supports the body of a user and partly a function of how well the support cushion conforms to the body of a user and provides a feeling of softness. In this regard, many users find support cushions, and in particular pillows, which are soft to be particularly desirable for supporting the head of the user as such support cushions significantly deform and cradle the head of the user to provide an increased feeling of softness. That deformation and increased feeling of softness, however, is often accompanied by a lack of support for the neck and shoulders of the user. Alternatively though, while many users find support cushions and, in particular, pillows, that are firm to be particularly desirable for supporting the neck and shoulders of the user, such firm support cushions can be overly hard, and thus, undesirable, for supporting the head of the user.

### SUMMARY

The present invention includes a dual density molded foam pillow and method of producing the same. In particular, the present invention relates to a molded foam pillow including an interior portion with a density less than that of an outer portion of the pillow according to claim 1.

In an exemplary pillow, the interior portion and the outer portion are comprised of a flexible foam (e.g., a visco-elastic foam) with the density of the interior portion being less than the density of the outer portion. The density of the flexible foam used in the outer portion has a density sufficient for supporting the neck and shoulders of a user. The flexible foam comprising the interior portion, on the other hand, has a density less than that or the outer portion and is suitable for supporting and providing a feeling of softness to the head of the user. For example, in certain embodiments, an exemplary pillow includes an outer portion that is comprised of visco-elastic foam with a density of about 70 kg/m³ to about 110 kg/m³ and a hardness of about 25 N to about 50 N, while the interior portion is comprised of a visco-elastic foam with a density of about 30 kg/m³ to about 50 kg/m³ and a hardness of about 5 N to about 25 N. In some embodiments, an exemplary pillow includes an outer portion that is comprised of visco-elastic foam with a density of about 100 kg/m³ and a hardness of about 45 N, while the interior portion is comprised of a visco-elastic foam with a density of about 40 kg/m³ and a hardness of about 10 N.

The exemplary pillows of the present invention can be provided in various configurations that similarly provide a feeling of softness to the head of a user and support to the neck and shoulders of a user, and do not include an interior portion that is flush with the outer portion on both sides of the pillow. For instance, in another exemplary embodiment, a flexible foam pillow is provided that includes an oval-shaped interior portion defining a perimeter and an outer portion that surrounds the perimeter of the interior portion of the pillow. The oval-shaped interior portion of this further exemplary pillow is also comprised of a flexible foam having a density less the flexible foam comprising the outer portion of the pillow. In this further pillow the interior portion is not flush with the outer portion on both sides of the pillow. Rather, in the pillow, the interior portion is recessed into an upper, first side of the pillow, while a lower, second side of the pillow is substantially flat. In this regard, to provide added support to the neck of a user and to provide an ergonomic surface on which a user can rest, in some embodiments, the pillow further includes four divots that each have an ovular shape and are positioned along the outer portion of the pillow such that the divots are configured to support the neck of a user when the user is resting on the first side of the pillow and the head of the particular user is lying on the recessed interior portion of the pillow.

In another exemplary embodiment of the present invention a flexible foam pillow is provided that also includes an interior portion recessed into a first side of the pillow and that is entirely surrounded by an outer portion comprised of flexible foam having a density greater than that forming the interior portion. To provide support to the neck and shoulders of a user, however, the pillow does not make use of divots positioned in the outer portion. Instead, in the pillow, the outer portion is raised relative to the interior portion with different sides of the raised outer portion having varying heights. In use, the exemplary pillow can thus be arranged, depending on user preferences, such that an increased amount of support is provided if a neck of a user is positioned on one side of the outer portion, while a lesser amount of support is provided if a neck of a user is positioned on another side of the outer portion of the pillow.

Each of the exemplary pillows described herein are typically produced by making use of a foam molding system. In an implementation of a method according to claim 6 for producing a pillow according to claim 1, a foam molding system is first provided. The foam molding system comprises a top mold and a bottom mold, with the top mold defining a recessed portion and the bottom mold similarly defining a recessed portion. When the top mold is then secured to the bottom mold, the recessed portion of the top mold and the recessed portion of the bottom mold align with one another to form a single internal cavity that in, in turn, is the negative of the pillow produced by the foam molding system.

Upon providing the foam molding system, a first foam precursor is then dispensed into a central portion of the bottom mold. After the first foam precursor is dispensed into a central portion of the bottom mold, a second foam precursor is then dispensed into a peripheral portion of the mold. After dispensing the first and second foam precursors into the bottom mold, the top mold is then secured to the bottom mold. Upon securing the top mold to the bottom mold, the first and second foam precursors are then allowed to expand and completely fill the internal cavity formed from the recessed portions of the top mold and the bottom mold. After the first and second foam precursor expands, the first and second foam precursors then set in the foam molding system such that the expanded foam formed from the first foam precursor is bonded to or otherwise combines with the expanded foam formed from the second foam precursor. After the foam precursor has reacted for an appropriate amount of time and the first and second foam precursors have set, a pillow is thereby formed and can then be removed from the foam molding system.

Claims 7 and 8 contain advantageous embodiments of the method in accordance with the present invention.

Further features and advantages of the present invention will become evident to those of ordinary skill in the art after a study of the description, figures, and non-limiting examples in this document

### BRIEF DESCRIPTION OF THE DRAWINGS

FIG. 3 is a perspective view of an exemplary pillow made in accordance with the present invention, including an interior portion and an outer portion, but having a recessed interior portion;
FIG. 4 is a perspective view of another exemplary pillow made in accordance with the present invention, including an interior portion and an outer portion, but having a raised outer portion;
FIG. 7 is a flowchart showing an exemplary implementation of a method of producing a pillow in accordance with the present invention.

### DESCRIPTION OF EXEMPLARY EMBODIMENTS

The present invention includes a dual density molded foam pillow and method of producing the same. In particular, the present invention relates to a molded foam pillow including an interior portion with a density different than that of an outer portion of the pillow.

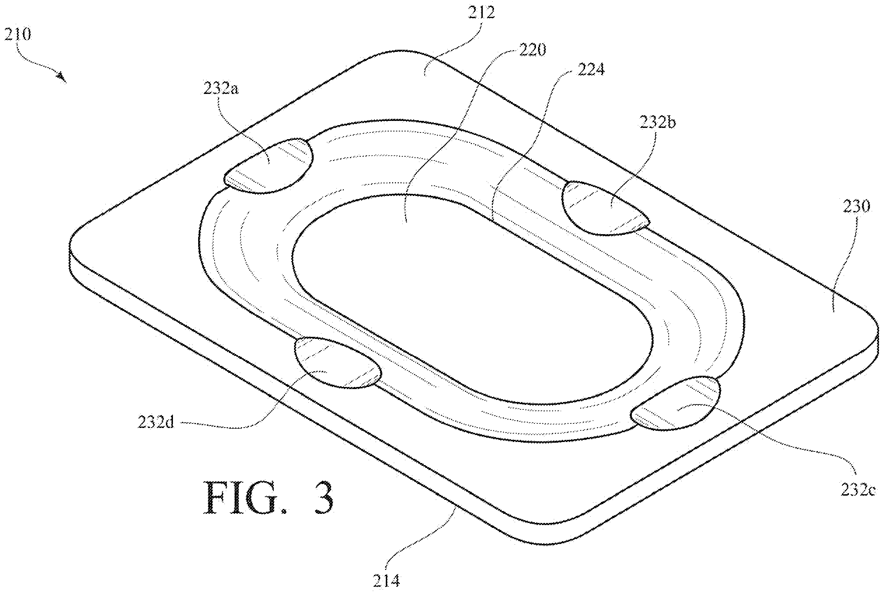

Exemplary pillows of the present invention can be provided in various configurations that similarly provide a feeling of softness to the head of a user and support to the neck and shoulders of a user, and do not include an interior portion that is flush with the outer portion on both sides of the pillow. For instance, as shown in FiG. 3, in an exemplary embodiment, a flexible foam pillow 210 is provided that includes an oval-shaped interior portion 220 defining a perimeter 224 and an outer portion 230 that surrounds the perimeter 224 of the interior portion 220 of the pillow 210. The oval-shaped interior portion 220 of the pillow 210 is comprised of a flexible foam having a density less the flexible foam comprising the outer portion 230 of the pillow 210. In the pillow 210 the interior portion 220 is not flush with the outer portion 230 on both sides of the pillow 210. Rather, in the pillow 210, the interior portion 220 is recessed into an upper, first side 212 of the pillow, while a lower, second side 214 of the pillow 210 is substantially flat. In this regard, to provide added support to the neck of a user and to provide an ergonomic surface on which a user can rest, the pillow 210 further includes four divots 232a, 232b, 232c, 232d that each have an ovular shape and are positioned along the outer portion 230 of the pillow 210 such that the divots 232a, 232b, 232c, 232d are configured to support the neck of a user when the user is resting on the first side 212 of the pillow and the head of the particular user is lying on the recessed interior portion 220 of the pillow 210.

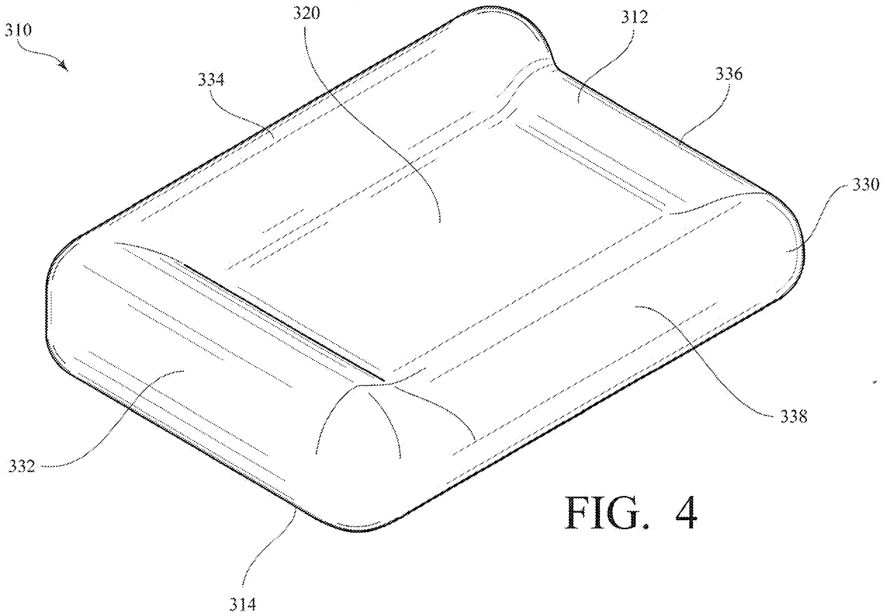

Referring now to FIG. 4, in another exemplary embodiment of the present invention that makes use of a recessed interior portion, a flexible foam pillow 310 is provided that includes an interior portion 320 recessed into a first side 312 of the pillow 310 and that is entirely surrounded by an outer portion 330 comprised of flexible foam having a density greater than that forming the interior portion 320. To provide support to the neck and shoulders of a user, however, the pillow 310 does not make use of divots positioned in the outer portion 330. Instead, in the pillow 310, the outer portion 330 is raised relative to the interior portion 320 and includes a first side 332, a second side 334, a third side 336, and a fourth side 338. In particular, in the pillow 310, the first side 332 and the second side 334 of the outer portion 330 are continuous with one another and each have the same height, while the third side 336 and the fourth side 338 of the outer portion 330 are continuous with one another and extend to a height that is less that the height of the first side 332 and the second side 334 of the outer portion 330 of the pillow 310. In this regard, the exemplary pillow 310 can thus be arranged, depending on user preferences, such that an increased amount of support is provided if a neck of a user is positioned on the first side 332 or the second side 334 of the outer portion 330, while a lesser amount of support (relative to the support provided by the first side 332 and second side 334) is provided if a neck of a user is positioned on the third side 336 or fourth side 338 of the outer portion 330 of the pillow 310.

As a further refinement to the exemplary pillows of the present invention, various covers and materials can also be included and used with the exemplary pillows. For example, it is contemplated that a pillow of the present invention can further include a cover in the form of a fire sock that surrounds the various portions of a pillow and is comprised of a flame retardant material. In some embodiments, an exemplary cover of the present invention can also be comprised of another textile, such as cotton, that provides a user with a sufficiently soft surface on which to rest.

In some embodiments of the exemplary pillows described herein, it is also contemplated that an amount of phase change material can be incorporated into a first side, a second side, or both of an exemplary pillow, Such phase change material is typically comprised of microspheres that include substances having a high heat effusion and that store or release heat as the substances oscillate between solid and liquid form (i.e., phase change materials). As the phase change material changes from solid to liquid form (i.e., melts) as the result of heat generated by a user lying on an exemplary pillow, the phase change material thus continually absorbs heat and provides a cooling effect to the user until all of the phase change material has been transformed from a solid to a liquid form.

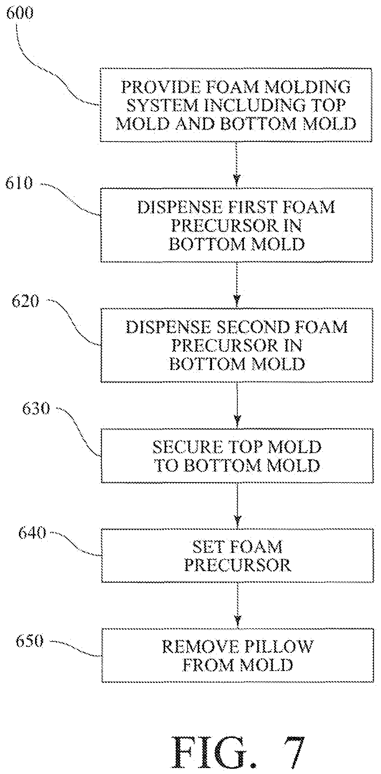

In one exemplary implementation of a method for producing a pillow, such as the pillow described above, and referring now to FIG. 7, a foam molding system is first provided, as indicated by step 600. The foam molding system comprises a top mold and a bottom mold, with the top mold defining a recessed portion and the bottom mold similarly defining a recessed portion as is recognized in the art. In this regard, when the top mold is secured to the bottom mold, the recessed portion of the top mold and the recessed portion of the bottom mold align with one another to form a single internal cavity that in, in turn, is the negative of the pillow produced by the foam molding system.

Referring still to FIG. 7, upon providing the foam molding system, a first foam precursor is then dispensed into a central portion of the bottom mold, as indicated by step 610. After the first foam precursor is dispensed into a central portion of the bottom mold, a second foam precursor is then dispensed into a peripheral portion of the mold, as indicated by step 620. As would be recognized by those of skill in the art, such foam precursors are generally a liquid composition that includes one or more polymeric precursors and that, upon curing, forms a solid foam product (e.g., a pillow).

In some embodiment, such foam precursors can be applied separately to produce a first and second flexible foam in an exemplary pillow. In other embodiments, however, the foam precursors can be applied as part of a continuous process whereby the isocyante index and shot weight of a particular foam precursor is varied over the course of being continually dispensed into a mold so as to produce a pillow having variable densities, such as those described herein above. As such, the terms "first foam precursor" and "second foam precursor" are used herein to refer to two separate compositions that are used to produce a pillow in accordance with the present invention, but are further inclusive of single compositions where the ingredients are varied over time to produce flexible foam having variable properties.

Irrespective of the particular manner in which the foam precursor is dispensed, and referring still to FIG. 7, after dispensing the first and second foam precursors into the bottom mold, the top mold is then secured to the bottom mold, as indicated by step 630. Upon securing the top mold to the bottom mold, the first and second foam precursors are then allowed to expand and completely fill the internal cavity formed from the recessed portions of the top mold and the bottom mold. After the first and second foam precursor expands, the first and second foam precursors then set in the foam molding system such that the expanded foam formed from the first foam precursor is bonded to or otherwise combines with the expanded foam formed from the second foam precursor as indicated by step 640. In some embodiments, the time required for the foam precursor to fully expand and set is about 10 to about 15 minutes, and in one preferred embodiment, the time is about 12 minutes. It is appreciated, however, that the time required for the foam precursor to set will, depend on the particular components of the foam precursor and that foam precursors having a particular setting time can readily be ascertained and selected by one skilled in the art.

After the foam precursor has reacted for an appropriate amount of time and the first and second foam precursors have set, a pillow is thereby formed and can then be removed from the foam molding system, as indicated by step 650. Specifically, to remove the pillow from the foam molding system, the top mold is removed from the bottom mold to allow the resulting pillow to be easily lifted from the bottom mold and fully cured outside of the foam molding system. In some implementations, the curing of an exemplary pillow produced by the present invention can take about 2 hours to about 4 hours, with an additional amount of time to allow the exothermic reaction of the foam precursor to complete and to allow the resulting pillow to fully cool. Of course, the pillow may also cure within the foam molding system itself; however, because of the extended curing time, in some implementations, it is more economical to remove the pillow and allow the foam precursor to cure separate from the foam molding system so that steps 600-650 may be repeated in the production of additional pillows.

One of ordinary skill in the art will recognize that additional embodiments are also possible without departing from the scope of the claims which follow. This detailed description, and particularly the specific details of the exemplary embodiments diseased herein, is given primarily for clarity of understanding, and no unnecessary limitations are to be understood therefrom, for modifications will become apparent to those skilled in the art upon reading this disclosure and may be made without departing from the scope of the claimed invention.

## Claims

1. A pillow (210, 310), comprising:
an interior portion (220, 320) comprised of a first flexible foam, the interior portion (220, 320) defining a perimeter (224); and
an outer portion (230, 330) comprised of a second flexible foam entirely surrounding the perimeter (224) of the interior portion (220, 320), the second flexible foam having a density different than that of the first flexible foam, **characterized in**
**that** the interior portion (220, 320) is configured to support a head of a user and the outer portion (230, 330) is configured to support a neck and shoulders of the user,
**that** the density of the first flexible foam is less than the density of the second flexible foam, and
**that** the interior portion (220, 320) is recessed relative to the outer portion (230, 330).

2. The pillow of claim 1, wherein the first flexible foam has a density of about 30 kg/m³ to about 50 kg/m³, and wherein the second flexible foam has a density of about 70 kg/m³ to about 110 kg/m³.

3. The pillow of claim 2, wherein the first flexible foam has a density of about 40 kg/m³ and the second flexible foam has a density of about 100 kg/m³.

4. The pillow of claim 1, wherein the outer portion (230, 330) defines one or more divots (232) positioned and having a shape configured to support a neck of a user.

5. The pillow of claim 1, wherein the outer portion (230, 330) includes a first side, a second side, a third side, and a fourth side, the first side and the second side of the outer portion being continuous with one another and each having a first height, and the third side and the fourth side being continuous with one another and each having a second height less than the first height.

6. A method of producing a pillow (210, 310) according to claim 1, comprising the steps of:
dispensing a first foam precursor into a central portion of a mold to produce a first flexible foam; and
dispensing a second foam precursor into a peripheral portion of the mold to produce a second flexible foam having a density different than that of the first flexible foam,
wherein, upon reaction and expansion of the first foam precursor and the second foam precursor, a molded foam pillow (210, 310) is produced having an interior portion (220, 320) with a density less than that of an outer portion (230, 330) of the pillow (210, 310).

7. The method of claim 6, further comprising the step of setting the first foam precursor and the second foam precursor in the mold for an amount of time sufficient to allow the first foam precursor and the second foam precursor to bond together.

8. The method of claim 6, wherein the first foam precursor, the second foam precursor, or both are a visco-elastic foam precursor.

## Patentansprüche

1. Kissen (210,310), umfassend:
- einen inneren Abschnitt (220, 320), der einen ersten flexiblen Schaumstoff aufweist, wobei der innere Abschnitt (220, 320) einen Umfang (224) ausbildet; und
- einen äußeren Abschnitt (230, 330), der einen zweiten flexiblen Schaumstoff aufweist, der den Umfang (224) des inneren Abschnitts (220, 320) vollständig umgibt, wobei der zweite flexible Schaumstoff eine andere Dichte aufweist als die des ersten flexiblen Schaumstoffs, **dadurch gekennzeichnet,**
- **dass** der innere Abschnitt (220, 320) eingerichtet ist, um einen Kopf eines Benutzers abzustützen, und der äußere Abschnitt (230, 330) eingerichtet ist, um einen Nacken und Schultern des Benutzers abzustützen,
- **dass** die Dichte des ersten flexiblen Schaumstoffs geringer ist als die Dichte des zweiten flexiblen Schaumstoffs, und
- **dass** der innere Abschnitt (220, 320) relativ zum äußeren Abschnitt des Kissens (230, 330) vertieft ist.

2. Kissen nach Anspruch 1, wobei der erste flexible Schaumstoff eine Dichte von ungefähr 30 kg/m³ bis ungefähr 50 kg/m³ aufweist und wobei der zweite flexible Schaumstoff eine Dichte von ungefähr 70 kg/m³ bis ungefähr 110 kg/m³ aufweist.

3. Kissen nach Anspruch 2, wobei der erste flexible Schaumstoff eine Dichte von ungefähr 40 kg/m³ und der zweite flexible Schaumstoff eine Dichte von ungefähr 100 kg/m³ aufweist.

4. Kissen nach Anspruch 1, wobei der äußere Abschnitt (230, 330) eine oder mehrere Ausnehmungen (232) bildet, die positioniert sind und eine Form aufweisen, die eingerichtet ist, um einen Nacken eines Benutzers abzustützen.

5. Kissen nach Anspruch 1, wobei der äußere Abschnitt (230, 330) eine erste Seite, eine zweite Seite, eine dritte Seite und eine vierte Seite umfasst, wobei die erste Seite und die zweite Seite des äußeren Abschnitts miteinander fortlaufend sind und jede eine erste Höhe aufweist, und die dritte Seite und die vierte Seite miteinander fortlaufend sind und jede eine zweite Höhe aufweist, die kleiner als die erste Höhe ist.

6. Verfahren zur Herstellung eines Kissens (210, 310) nach Anspruch 1, das die Schritte aufweist:
- Abgeben eines ersten Schaumstoff-Präkursors in einen zentralen Abschnitt einer Form, um einen ersten flexiblen Schaum herzustellen; und
- Abgeben eines zweiten Schaumstoff-Präkursors in einen peripheren Abschnitt der Form, um einen zweiten flexiblen Schaumstoff mit einer Dichte herzustellen, die sich von der des ersten flexiblen Schaumstoffs unterscheidet,
- wobei bei Reaktion und Expansion des ersten Schaumstoff-Präkursors und des zweiten Schaumstoff-Präkursors ein geformtes Schaumstoffkissen (210, 310) mit einem inneren Abschnitt (220, 320) mit einer Dichte hergestellt wird, die geringer ist als die eines äußeren Abschnitts (230, 330) des Kissens (310).

7. Verfahren nach Anspruch 6, das ferner den Schritt zum Festlegen des ersten Schaumstoff-Präkursors und des zweiten Schaumstoff-Präkursors in der Form für eine Zeitdauer aufweist, die ausreichend ist, um zu ermöglichen, dass sich der erste Schaumstoff-Präkursor und der zweite Schaumstoff-Präkursor miteinander verbinden.

8. Verfahren nach Anspruch 6, wobei der erste Schaumstoff-Präkursor, der zweite Schaumstoff-Präkursor oder beide ein viskoelastischer Schaumstoff-Präkursor sind.

## Revendications

1. Oreiller (210, 310), comprenant:
une partie interne (220, 320) comprenant une première mousse souple, la partie interne (220, 320) définissant un périmètre (224) ; et
une partie externe (230, 330) comprenant une deuxième mousse souple entourant totalement le périmètre (224) de la partie interne (220, 320),
la deuxième mousse souple ayant une densité différente de celle de la première mousse souple, **caractérisé en ce que**
la partie interne (220, 320) est configurée pour supporter la tête d'un utilisateur et la partie externe (230, 330) est configurée pour supporter le cou et les épaules de l'utilisateur,
la densité de la première mousse souple est inférieure à la densité de la deuxième mousse souple, et
la partie interne (220, 320) est en retrait par rapport à la partie externe (230, 330).

2. Oreiller de la revendication 1, dans lequel la première mousse souple a une densité comprise entre environ 30 kg/m³ et environ 50 kg/m³, et dans lequel la deuxième mousse souple a une densité comprise entre environ 70 kg/m³ et environ 110 kg/m³.

3. Oreiller de la revendication 2, dans lequel la première mousse souple a une densité d'environ 40 kg/m³ et la deuxième mousse souple a une densité d'environ 100 kg/m³.

4. Oreiller de la revendication 1, dans lequel la partie externe (230, 330) définit un ou plusieurs divot(s) (232) positionné(s) et ayant une forme configurée pour supporter le cou d'un utilisateur.

5. Oreiller de la revendication 1, dans lequel la partie externe (230, 330) comporte un premier côté, un deuxième côté, un troisième côté et un quatrième côté, le premier côté et le deuxième côté de la partie externe étant continus l'un avec l'autre et ayant chacun une première hauteur, et le troisième côté et le quatrième côté étant continus l'un avec l'autre et ayant chacun une deuxième hauteur inférieure à la première hauteur.

6. Procédé de production d'un oreiller (210, 310) selon la revendication 1, comprenant les étapes consistant :
à distribuer un premier précurseur de mousse dans une partie centrale d'un moule pour produire une première mousse souple ; et
à distribuer un deuxième précurseur de mousse dans une partie périphérique du moule pour produire une deuxième mousse souple ayant une densité différente de celle de la première mousse souple,
dans lequel, lors de la réaction et de l'expansion du premier précurseur de mousse et du deuxième précurseur de mousse, un oreiller en mousse moulée (210, 310) ayant une partie interne (220, 320) présentant une densité inférieure à celle d'une partie externe (230 330) de l'oreiller (210 310) est produit.

7. Procédé de la revendication 6, comprenant en outre l'étape consistant à placer le premier précurseur de mousse et le deuxième précurseur de mousse dans le moule pendant une durée suffisante pour permettre au premier précurseur de mousse et au deuxième précurseur de mousse de se lier ensemble.

8. Procédé de la revendication 6, dans lequel le premier précurseur de mousse, le deuxième précurseur de mousse ou les deux sont un précurseur de mousse viscoélastique.
